# FASCICULE DE BREVET EUROPEEN

(11) **EP 4 523 933 B1**
(45) Date de publication et mention de la délivrance du brevet: **28.01.2026**
(21) Numéro de dépôt: 24191888.7
(22) Date de dépôt: 30.07.2024
(51) Int. Cl.: B60H 1/00, B60H 1/32, B60K 1/00

(54) **VÉHICULE AUTOMOBILE COMPRENANT UNE MACHINE ÉLECTRIQUE, UN COMPRESSEUR DE CLIMATISATION FORMANT SUPPORT DE LADITE MACHINE ÉLECTRIQUE**
KRAFTFAHRZEUG MIT EINER ELEKTRISCHEN MASCHINE, EINEM KLIMAKOMPRESSOR, DER DIE HALTERUNG DIESER ELEKTRISCHEN MASCHINE BILDET
MOTOR VEHICLE COMPRISING AN ELECTRIC MACHINE, AN AIR-CONDITIONING COMPRESSOR FORMING A SUPPORT FOR SAID ELECTRIC MACHINE

(30) Priorité: 15.09.2023 FR 2309738
(43) Date de publication de la demande: 19.03.2025
(73) Titulaire: Renault s.a.s, 92100 Boulogne Billancourt (FR)
(72) Inventeur: BUFFETAUD, Julien, 78280 GUYANCOURT (FR); EVEN, Franck, 78280 GUYANCOURT (FR)

(56) Documents cités:
- CN-A- 106 183 763
- CN-A- 110 481 298
- US-A1- 2019 039 440
- US-B2- 11 034 228
- US-B2- 9 518 590

## Description

La présente invention concerne le domaine des véhicules automobiles et notamment la fixation d'un compresseur dans un véhicule comprenant au moins une machine électrique.

Le compresseur est, de préférence, un compresseur de climatisation d'un système de climatisation.

Le véhicule automobile peut être à propulsion thermique véhicule thermique et électrique en étant un véhicule hybride, la machine électrique assurant au moins partiellement la propulsion du véhicule. Le véhicule automobile peut aussi être un véhicule à propulsion électrique seule.

Un véhicule automobile d'un type connu est divulgué par CN 110 481 298 A. Aujourd'hui, les compresseurs du système de climatisation du véhicule automobile sont fixés sur la machine électrique, ce qui permet de profiter de la filtration de cette dernière. La machine électrique est ensuite reliée à une traverse de support par deux pièces de suspension se trouvant chacune à une extrémité opposée de la machine électrique.

La machine électrique est également fixée à la caisse du véhicule par un deuxième support du côté du réducteur de ladite machine électrique.

L'encombrement des compresseurs électriques nommés « e-compresseurs » ne permet plus leur intégration sur les moteurs. En effet, de tels compresseurs nécessitent un besoin de filtration plus performant.

Par ailleurs, le deuxième support nécessite d'avoir des points de fixation suffisamment écartés sur le réducteur de la machine électrique afin d'assurer une raideur suffisante de maintient ainsi qu'un bon niveau vibratoire.

La fixation d'un e-compresseur du côté du réducteur de la machine électrique engendre une interférence avec le deuxième support de la machine électrique.

Il existe donc un besoin d'améliorer la fixation des nouveaux compresseurs de climatisation dans un véhicule automobile comprenant au moins une machine électrique.

Un objectif de l'invention est de proposer une fixation d'un compresseur de climatisation, tout en réduisant l'encombrement du support du côté du réducteur de la machine électrique.

La présente invention a pour objet un véhicule automobile comprenant au moins une machine électrique s'étendant selon un axe transversal entre deux longerons longitudinaux, ladite machine électrique comprenant un arbre d'entrainement solidaire d'un réducteur.

Le véhicule automobile comprend en outre un compresseur d'un système de climatisation s'étendant selon un axe longitudinal perpendiculaire à l'axe transversal.

Le compresseur comprend un manchon de fixation s'étendant verticalement depuis une surface cylindrique externe du compresseur vers le longeron du côté du réducteur et formant un support de la machine électrique du côté du réducteur.

L'intégration du manchon de fixation au corps du compresseur permet un gain de volume global, de masse, ainsi qu'un coût et un temps d'assemblage réduit.

Avantageusement, le manchon de fixation comprend une extrémité distale solidaire du longeron du côté réducteur.

Par exemple, l'extrémité distale est solidaire d'un organe de liaison par des moyens de visseries, par exemple une vis verticale, lui-même solidaire du longeron du côté réducteur.

Avantageusement, le manchon de fixation comprend en outre une extrémité proximale solidaire de la surface cylindrique externe du compresseur.

Par « extrémité proximale », on entend une extrémité plus proche de corps cylindrique du compresseur que l'« extrémité distale ».

L'extrémité proximale du manchon de fixation est, de préférence, en concordance de forme avec la surface cylindrique externe du compresseur.

Avantageusement, le manchon de fixation est venu de matière avec le corps du compresseur.

Le manchon de fixation est par exemple réalisé en matériau métallique.

En variante, on pourrait prévoir de surmouler le manchon de fixation sur le corps du compresseur.

Avantageusement, le réducteur comprend trois pattes de fixation transversale s'étendant selon l'axe transversal vers le longeron du côté opposé à la machine électrique.

Par exemple, les pattes de fixation du réducteur sont régulièrement réparties sur le pourtour dudit réducteur.

Avantageusement, le compresseur comprend en outre au moins trois plots de fixation transversaux s'étendent transversalement depuis le corps du compresseur et configurés chacun pour coopérer avec une patte de fixation du réducteur pour la fixation dudit réducteur sur le compresseur.

L'interface de fixation particulière du compresseur sur le réducteur permet de positionner le compresseur de climatisation du côté du réducteur de ladite machine électrique sans dégrader la prestation vibratoire de ladite machine électrique tout en bénéficiant de l'écartement des points de fixation du compresseur sur le réducteur.

Par exemple, deux des plots de fixation transversaux du compresseur s'étendent transversalement depuis la surface cylindrique externe du compresseur, de préférence la surface supérieure et la surface inférieure et un des plots de fixation transversaux s'étend depuis une surface latérale du compresseur.

Avantageusement, chaque plot de fixation transversal du compresseur présente une forme cylindrique comprenant un alésage configuré pour recevoir l'extrémité d'une patte de fixation correspondante du réducteur, lesdites pattes de fixation du réducteur sont rendues solidaire d'un plot de fixation transversal associé du compresseur par l'intermédiaire de moyens de visseries, par exemple une vis de fixation transversale.

Par exemple, la machine électrique comprend un carter s'étendant selon l'axe transversal et délimité transversalement par une première extrémité du côté opposé au réducteur et une deuxième extrémité du côté du réducteur, ladite première extrémité de la machine électrique étant fixé sur une premier support du côté de la suspension du véhicule.

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1] illustre de manière très schématique une partie du compartiment moteur d'un véhicule automobile selon l'invention ;

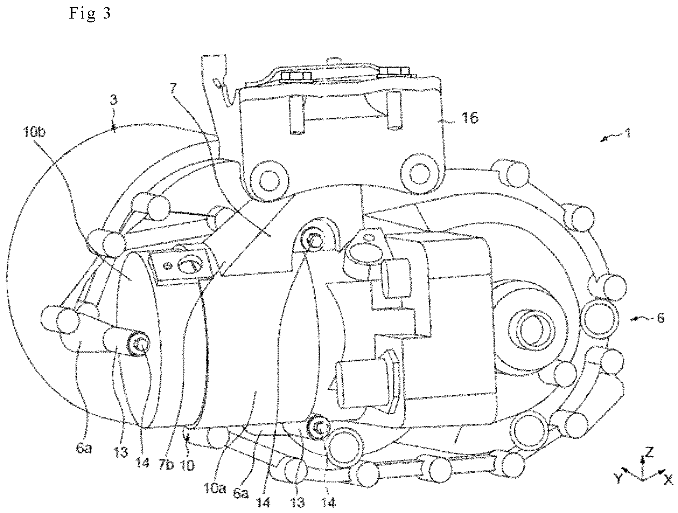

[Fig.2] et [Fig.3] sont des vues de détails de la figure 1.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

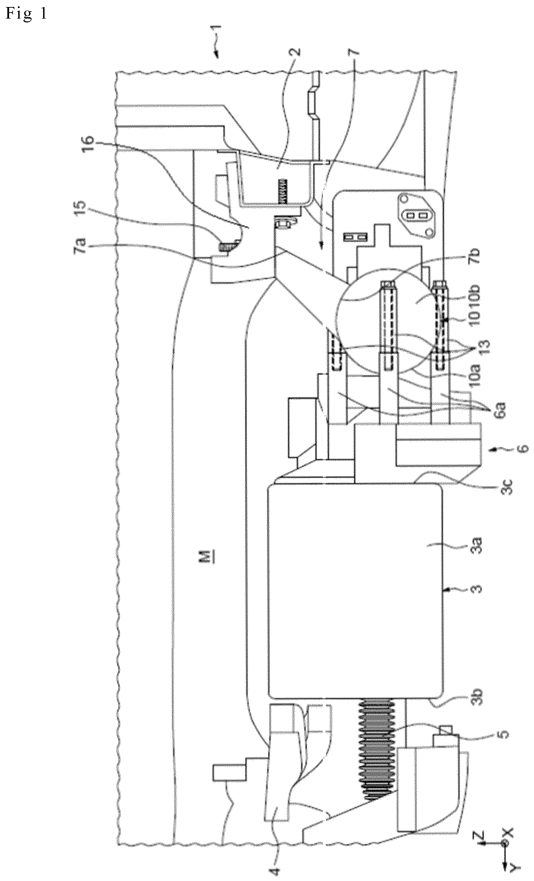

La figure 1 illustre un exemple d'une partie avant 1 d'un compartiment moteur M d'un véhicule automobile. Le compartiment moteur M est fermé par un capot (non représenté) et est séparé de l'habitacle du véhicule par une paroi transversale ou tablier (non représentée).

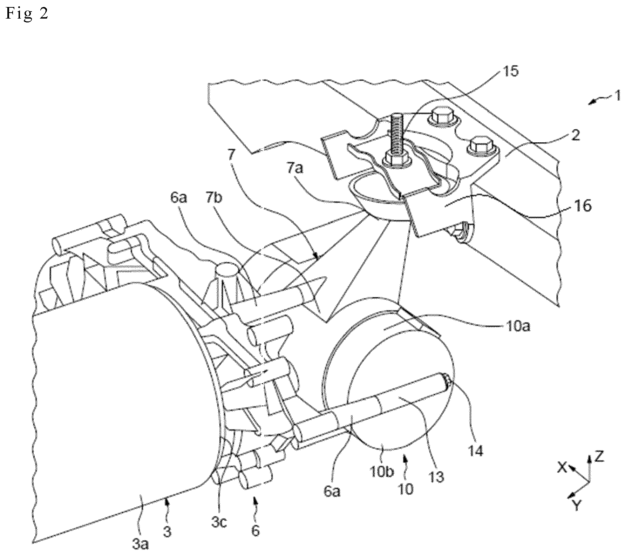

Le véhicule automobile comprend, de manière connue, un châssis configuré pour supporter l'ensemble des composants mécaniques et la carrosserie du véhicule. Le châssis comprend deux longerons longitudinaux 2 s'étendant chacun selon l'axe longitudinal X et dont seul un est visible sur les figures 1 et 2, et une pluralité de traverses transversales disposées entre lesdites longerons 2.

Le véhicule automobile 1 comprend en outre une machine électrique 3 comprenant un carter 3a, ici cylindrique, s'étendant selon l'axe transversal Y et délimité transversalement par une première extrémité 3b et une deuxième extrémité 3c.

La première extrémité 3b de la machine électrique 3 est fixé sur une premier support 4, du côté de la suspension 5 du véhicule 1.

La deuxième extrémité 3c de la machine électrique 3, à partir de laquelle s'étend un arbre d'entrainement (non visible sur les figure) relié à un réducteur 6 comprenant des pattes de fixation transversales 6a, ici au nombre de trois, s'étendant selon l'axe transversal Y vers le longeron 2, du côté opposé à la machine électrique 3.

Les pattes de fixation transversales 6a sont régulièrement réparties sur le pourtour du réducteur 6 et forment ici un angle de 120° l'une par rapport à l'autre.

Le véhicule automobile comprend en outre un compresseur 10 d'un système de climatisation (non représenté) du véhicule automobile.

Le compresseur 10 comprend un corps 10a sensiblement cylindrique s'étendant selon l'axe longitudinal X, perpendiculairement à la machine électrique 3.

Le compresseur 10 comprend un manchon de fixation 7 formant un deuxième support de la machine électrique du côté du réducteur 6.

Le manchon de fixation 7 s'étend verticalement depuis la surface cylindrique externe 10a du compresseur vers le longeron 2 du côté du réducteur.

Le manchon de fixation 7 comprend une extrémité distale 7a solidaire du longeron 2 du côté réducteur 6 par l'intermédiaire d'un organe de liaison 16 ou tampon lui-même solidaire du longeron 2.

L'extrémité distale 7a du manchon 7 est fixée à l'organe de liaison 16 par des moyens de visseries, par exemple une vis de fixation verticale 15.

Le manchon 7 comprend en outre une extrémité proximale 7b solidaire de la surface cylindrique externe 10a du compresseur 10.

L'extrémité proximale 7b du manchon de fixation 7 est en concordance de forme avec la surface cylindrique externe 10a du compresseur 10.

Le manchon de fixation 7 est venu de matière avec le corps du compresseur 10.

Le compresseur 10 comprend en outre des plots de fixation transversaux 13, ici, au nombre de trois, dont deux s'étendent transversalement depuis la surface cylindrique externe 10a du compresseur, ici la surface supérieure et la surface inférieure et un plot de fixation transversal 13 s'étend depuis une surface latérale 10b.

Chaque plot de fixation transversal 13 présente une forme cylindrique comprenant un alésage configuré pour recevoir l'extrémité d'une patte de fixation 6a correspondante du réducteur 6. Une patte de fixation 6a du réducteur 6 est rendue solidaire d'un plot de fixation transversal associé 13 par l'intermédiaire de moyens de visseries 14, notamment une vis de fixation transversale.

Le réducteur 6 est ainsi solidaire du corps du compresseur 10, de sorte à maintenir la machine électrique 3 sur ledit compresseur 10 du côté du réducteur 6.

L'interface de fixation particulière du compresseur sur le réducteur permet de positionner le compresseur de climatisation du côté du réducteur de ladite machine électrique sans dégrader la prestation vibratoire de ladite machine électrique tout en bénéficiant de l'écartement des points de fixation du compresseur sur le réducteur.

Par ailleurs, le compresseur de climatisation agit comme pièce support de la machine électrique du côté du réducteur.

## Revendications

1. Véhicule (1) automobile comprenant au moins une machine électrique (3) s'étendant selon un axe transversal (Y) entre deux longerons longitudinaux (2), ladite machine électrique (3) comprenant un arbre d'entrainement solidaire d'un réducteur (6), le véhicule automobile comprenant en outre un compresseur (10) d'un système de climatisation s'étendant selon un axe longitudinal (X) perpendiculaire à l'axe transversal (Y), **caractérisé en ce que** le compresseur (10) comprend un manchon de fixation (7) s'étendant verticalement depuis une surface cylindrique externe (10a) du compresseur (10) vers le longeron (2) du côté du réducteur (6) et formant un support de la machine électrique (3) du côté du réducteur (6).

2. Véhicule (1) selon la revendication 1, dans lequel le manchon de fixation (7) comprend une extrémité distale (7a) solidaire du longeron (2) du côté réducteur (6) et une extrémité proximale (7b) solidaire de la surface cylindrique externe (10a) du compresseur (10).

3. Véhicule (1) selon la revendication 2, dans lequel l'extrémité proximale (7b) du manchon de fixation (7) est en concordance de forme avec la surface cylindrique externe (10a) du compresseur (10).

4. Véhicule (1) selon l'une quelconque des revendications précédentes, dans lequel le manchon de fixation (7) est venu de matière avec le corps du compresseur (10).

5. Véhicule (1) selon l'une quelconque des revendications précédentes, dans lequel le réducteur (6) comprend trois pattes de fixation (6a) s'étendant selon l'axe transversal (Y) vers le longeron (2) du côté opposé à la machine électrique (3).

6. Véhicule (1) selon la revendication 5, dans lequel le compresseur (10) comprend en outre au moins trois plots de fixation transversaux (13) s'étendent transversalement depuis le corps du compresseur (10) et configurés chacun pour coopérer avec une patte de fixation (6a) du réducteur (6) pour la fixation dudit réducteur (6) sur le compresseur (10).

7. Véhicule (1) selon la revendication 6, dans lequel deux des plots de fixation transversaux (13) du compresseur (10) s'étendent transversalement depuis la surface cylindrique externe (10a) du compresseur et un des plots de fixation transversaux (13) s'étend depuis une surface latérale (10b) du compresseur (10).

8. Véhicule (1) selon la revendication 6 ou 7, dans lequel chaque plot de fixation transversal (13) du compresseur (10) présente une forme cylindrique comprenant un alésage configuré pour recevoir l'extrémité d'une patte de fixation (6a) correspondante du réducteur (6), lesdites pattes de fixation (6a) du réducteur (6) sont rendues solidaire d'un plot de fixation transversal associé (13) du compresseur (10) par l'intermédiaire de moyens de visseries (14).

9. Véhicule (1) selon l'une quelconque des revendications précédentes, dans lequel la machine électrique (3) comprend un carter (3a) s'étendant selon l'axe transversal (Y) et délimité transversalement par une première extrémité (3b) du côté opposé au réducteur (6) et une deuxième extrémité (3c) du côté du réducteur (6), ladite première extrémité (3b) de la machine électrique (3) étant fixé sur une premier support (4) du côté de la suspension (5) du véhicule.

## Patentansprüche

1. Kraftfahrzeug (1), welches mindestens eine elektrische Maschine (3) umfasst, die sich entlang einer Querachse (Y) zwischen zwei Längsholmen (2) erstreckt, wobei die elektrische Maschine (3) eine mit einem Untersetzungsgetriebe (6) fest verbundene Antriebswelle umfasst, wobei das Kraftfahrzeug außerdem einen Kompressor (10) einer Klimaanlage umfasst, der sich entlang einer zu der Querachse (Y) senkrechten Längsachse (X) erstreckt, **dadurch gekennzeichnet, dass** der Kompressor (10) eine Befestigungshülse (7) umfasst, die sich vertikal von einer zylindrischen Außenfläche (10a) des Kompressors (10) aus zu dem Längsholm (2) auf der Seite des Untersetzungsgetriebes (6) hin erstreckt und eine Halterung der elektrischen Maschine (3) auf der Seite des Untersetzungsgetriebes (6) bildet.

2. Fahrzeug (1) nach Anspruch 1, wobei die Befestigungshülse (7) ein distales Ende (7a), das mit dem Längsholm (2) auf der Seite des Untersetzungsgetriebes (6) fest verbunden ist, und ein proximales Ende (7b), das mit der zylindrischen Außenfläche (10a) des Kompressors (10) fest verbunden ist, umfasst.

3. Fahrzeug (1) nach Anspruch 2, wobei eine Übereinstimmung der Form des proximalen Endes (7b) der Befestigungshülse (7) mit der Form der zylindrischen Außenfläche (10a) des Kompressors (10) vorhanden ist.

4. Fahrzeug (1) nach einem der vorhergehenden Ansprüche, wobei die Befestigungshülse (7) stoffschlüssig mit dem Körper des Kompressors (10) verbunden ist.

5. Fahrzeug (1) nach einem der vorhergehenden Ansprüche, wobei das Untersetzungsgetriebe (6) drei Befestigungslaschen (6a) umfasst, die sich entlang der Querachse (Y) zu dem Längsholm (2) auf der zu der elektrischen Maschine (3) entgegengesetzten Seite hin erstrecken.

6. Fahrzeug (1) nach Anspruch 5, wobei der Kompressor (10) außerdem mindestens drei quer angeordnete Befestigungsblöcke (13) umfasst, die sich vom Körper des Kompressors (10) aus in Querrichtung erstrecken und jeweils dafür ausgelegt sind, mit einer Befestigungslasche (6a) des Untersetzungsgetriebes (6) zur Befestigung des Untersetzungsgetriebes (6) am Kompressor (10) zusammenzuwirken.

7. Fahrzeug (1) nach Anspruch 6, wobei zwei der quer angeordneten Befestigungsblöcke (13) des Kompressors (10) sich von der zylindrischen Außenfläche (10a) des Kompressors aus in Querrichtung erstrecken und einer der quer angeordneten Befestigungsblöcke (13) sich von einer Seitenfläche (106) des Kompressors (10) aus erstreckt.

8. Fahrzeug (1) nach Anspruch 6 oder 7, wobei jeder quer angeordnete Befestigungsblock (13) des Kompressors (10) eine zylindrische Form aufweist, die eine Bohrung umfasst, die dafür ausgelegt ist, das Ende einer entsprechenden Befestigungslasche (6a) des Untersetzungsgetriebes (6) aufzunehmen, wobei die Befestigungslaschen (6a) des Untersetzungsgetriebes (6) mit einem zugeordneten quer angeordneten Befestigungsblock (13) des Kompressors (10) durch Verschraubungsmittel (14) fest verbunden sind.

9. Fahrzeug (1)nach einem der vorhergehenden Ansprüche, wobei die elektrische Maschine (3) ein Gehäuse (3a) umfasst, das sich entlang der Querachse (Y) erstreckt und in Querrichtung von einem ersten Ende (3b) auf der zum Untersetzungsgetriebe (6) entgegengesetzten Seite und einem zweiten Ende (3c) auf der Seite des Untersetzungsgetriebes (6) begrenzt wird, wobei das erste Ende (3b) der elektrischen Maschine (3) an einer ersten Halterung (4) auf der Seite der Aufhängung (5) des Fahrzeugs befestigt ist.

## Claims

1. Motor vehicle (1) comprising at least one electric machine (3) that extends along a transverse axis (Y) between two longitudinal side rails (2), said electric machine (3) comprising a drive shaft that is rigidly connected to a reduction gear (6), the motor vehicle further comprising a compressor (10) of an air-conditioning system that extends along a longitudinal axis (X) perpendicular to the transverse axis (Y), **characterized in that** the compressor (10) comprises a fastening sleeve (7) that extends vertically from an outer cylindrical surface (10a) of the compressor (10) towards the side rail (2) on the same side as the reduction gear (6) and forms a support for the electric machine (3) on the same side as the reduction gear (6).

2. Vehicle (1) according to Claim 1, wherein the fastening sleeve (7) comprises a distal end (7a) rigidly connected to the side rail (2) on the same side as the reduction gear (6) and a proximal end (7b) rigidly connected to the outer cylindrical surface (10a) of the compressor (10).

3. Vehicle (1) according to Claim 2, wherein the proximal end (7b) of the fastening sleeve (7) matches the shape of the outer cylindrical surface (10a) of the compressor (10).

4. Vehicle (1) according to any one of the preceding claims, wherein the fastening sleeve (7) is made in one piece with the body of the compressor (10).

5. Vehicle (1) according to any one of the preceding claims, wherein the reduction gear (6) comprises three fastening lugs (6a) that extend along the transverse axis (Y) towards the side rail (2) on the opposite side to the electric machine (3).

6. Vehicle (1) according to Claim 5, wherein the compressor (10) further comprises at least three transverse fastening mountings (13) that extend transversely from the body of the compressor (10) and are each configured to cooperate with a fastening lug (6a) of the reduction gear (6) in order to fasten said reduction gear (6) to the compressor (10).

7. Vehicle (1) according to Claim 6, wherein two of the transverse fastening mountings (13) of the compressor (10) extend transversely from the outer cylindrical surface (10a) of the compressor and one of the transverse fastening mountings (13) extends from a lateral surface (10b) of the compressor (10).

8. Vehicle (1) according to Claim 6 or 7, wherein each transverse fastening mounting (13) of the compressor (10) has a cylindrical shape comprising a bore configured to receive the end of a corresponding fastening lug (6a) of the reduction gear (6), said fastening lugs (6a) of the reduction gear (6) are rigidly connected to an associated transverse fastening mounting (13) of the compressor (10) using screw-fastening means (14).

9. Vehicle (1) according to any one of the preceding claims, wherein the electric machine (3) comprises a casing (3a) that extends along the transverse axis (Y) and is delimited transversely by a first end (3b) on the opposite side to the reduction gear (6) and a second end (3c) on the same side as the reduction gear (6), said first end (3b) of the electric machine (3) being fastened to a first support (4) on the same side as the suspension (5) of the vehicle.
